# EUROPÄISCHE PATENTANMELDUNG

(11) **EP 0 897 832 A1**
(43) Veröffentlichungstag der Anmeldung: **24.02.1999**
(21) Anmeldenummer: 98113360.6
(22) Anmeldetag: 17.07.1998
(51) Int. Cl.: B60R 5/04, B60P 7/02

(54) **Anordnung mit einer Gepäckraumabdeckung in einem Fahrzeug**

(30) Priorität: 16.08.1997 DE 19735439
(71) Anmelder: Volkswagen Aktiengesellschaft, 38436 Wolfsburg (DE)
(72) Erfinder: Thill, Albert, Dipl.-Ing., 38554 Weyhausen (DE); Koal, Bernd, 38468 Ehra-Lessien (DE); Fesser, Rüdiger, 38539 Müden (DE); Karg, Horst, 38442 Wolfsburg (DE); Saracino, Egidio, 38446 Wolfsburg (DE)

(57) **Zusammenfassung**

Die Erfindung betrifft eine Anordnung mit einer Gepäckraumabdeckung (1) in einem Fahrzeug, die mit seitlichen Lagerzapfen (2) an aufbaufesten Lagerstellen (3) eines Auflagerahmens (4) gelagert ist und zwischen einer den Gepäckraum abdeckenden Schließstellung (7) und einer Offenstellung (8) verschwenkbar ist. Erfindungsgemäß ist wenigstens ein vorgespanntes Stützelement (5; 16) mit einem Ende an der Gepäckraumabdeckung (1) oder dem Auflagerahmen (4) befestigt. Das Stützelement (5; 16) ist in der Schließstellung (7) der Gepäckraumabdeckung (1) in einer vorgespannten Ruhestellung (6; 23) gehalten und bei einer Schwenkung der Gepäckraumabdeckung (1) in deren Offenstellung (8) aufgrund der Vorspannung selbsttätig mit seinem freien Ende (9; 20) in eine Stützstellung (15; 24) bewegbar. In dieser Stützstellung (15; 24) ist die Gepäckraumabdeckung (1) in der Offenstellung (8) gegenüber dem Auflagerahmen (4) abgestützt und gehalten. Vorteilhaft ist durch eine derartige Anordnung die Bewegung der Gepäckraumabdeckung (1) von einer Bewegung einer Heckklappe entkoppelt. Nur wenn ein Benutzer eine Offenstellung (8) der Gepäckraumabdeckung (1) wünscht, kann er diese von Hand hochschwenken, wo sie in der Offenstellung abgestützt und gehalten wird.

## Beschreibung

Die Erfindung betrifft eine Anordnung mit einer Gepäckraumabdeckung in einem Fahrzeug nach dem Oberbegriff des Anspruchs 1.

Bei einer bekannten Anordnung mit einer Gepäckraumabdeckung in einem Fahrzeug ist die Gepäckraumabdeckung mit seitlichen Lagerzapfen an aufbaufesten Lagerstellen an einem Auflagerahmen gelagert und zwischen einer, den Gepäckraum abdeckenden Schließstellung und einer Offenstellung verschwenkbar.

Derartige Abdeckungen werden in Fahrzeugen verwendet, bei denen der Gepäckraum hinter der Rücksitzbank aber noch innerhalb der Fahrgastzelle angeordnet und über eine Heckklappe zugängig ist.

Bei bekannten Anordnungen ist die Abdeckung über Haltebänder mit der Heckklappe verbunden. Beim Öffnen der Heckklappe wird zwangsweise auch die Gepäckraumabdeckung in ihre Offenstellung geschwenkt und gehalten. Da eine Gepäckraumabdeckung als Ablage für Gegenstände verwendet wird, ergibt sich durch eine zwangsweise Haltebandkoppelung mit der Heckklappe der Nachteil, daß bei jedem Öffnen der Heckklappe die Gepäckraumabdeckung in eine Schräglage geschwenkt und damit unerwünscht abgeräumt wird. Um dies zu vermeiden sind auch lösbare Haltebänder bekannt. Bei einer Lösung der Haltebänder wird jedoch die Gepäckraumabdeckung in ihrer Offenstellung nicht gehalten.

Aufgabe der Erfindung ist es, eine gattungsgemäße Anordnung mit einer Gepäckraumabdeckung so weiterzubilden, daß auf Haltebänder verzichtet werden kann.

Diese Aufgabe wird mit den kennzeichnenden Merkmalen des Patentanspruchs 1 gelöst.

Gemäß Anspruch 1 ist wenigstens ein vorgespanntes Stützelement mit einem Ende an der Gepäckraumabdeckung oder dem Auflagerahmen befestigt. Das Stützelement ist in der Schließstellung der Gepäckraumabdeckung in einer vorgespannten Ruhestellung gehalten. Bei einer Schwenkung der Gepäckraumabdeckung von Hand in deren Offenstellung ist das Stützelement aufgrund der Vorspannung selbsttätig mit seinem freien Ende in eine Stützstellung bewegbar, wobei die Gepäckraumabdeckung in der Offenstellung gegenüber dem Auflagerahmen abgestützt und gehalten ist.

Die Bewegung der Gepäckraumabdeckung ist somit hier von einer Bewegung der Heckklappe entkoppelt. Nur wenn der Benutzer eine Offenstellung der Gepäckraumabdeckung wünscht, kann er diese von Hand hochschwenken, wodurch das vorgespannte Stützelement selbsttätig in seine Stützstellung gelangt und die Gepäckraumabdeckung in der Offenstellung hält.

Grundsätzlich kann das vorgespannte Stützelement entweder an der Gepäckraumabdeckung oder dem Auflagerahmen befestigt sein. Bevorzugt wird das Stützelement in einer Baueinheit an der Gepäckraumabdeckung befestigt. Je nach den Gegebenheiten kann ein Stützelement in einem Seitenbereich der Gepäckraumabdeckung ausreichend sein. Es können auch mehrere Stützelemente, insbesondere je ein Stützelement in jedem Seitenbereich angebracht werden.

In einer bevorzugten, konkreten Ausführungsform ist das Stützelement als schwenkbar vorgespannter Stützhebel ausgebildet, wobei wenigstens ein Stützhebel in einem seitlichen Bereich der Gepäckraumabdeckung gelagert ist. In der Ruhestellung des Stützhebels entsprechend der Schließstellung der Gepäckraumabdeckung liegt der Stützhebel engeklappt etwa parallel zur Gepäckraumabdeckung und dem Auflagerahmen. Wenn die Gepäckraumabdeckung von Hand hochgeschwenkt wird, schwenkt zugleich der Stützhebel selbsttätig in seine aufgerichtete Position aus. In der Offenstellung der Gepäckraumabdeckung steht dann der Stützhebel voll aufgerichtet zwischen der Gepäckraumabdeckung und dem Auflagerahmen. Bevorzugt wird diese aufgerichtete Stützstellung über einen Anschlag definiert, gegen den die Gepäckraumabdeckung und/oder der Stützhebel aufgeschwenkt wird.

Auf dem aufgerichteten Stützhebel lastet das Gewicht der aufgeschwenkten Gepäckraumabdeckung, wodurch der Stützhebel in seiner Stützstellung gehalten wird. Der Stützhebel kann in seiner Stützstellung sowohl durch einen Reibschluß gegenüber dem Auflagerahmen als auch durch einen Formschluß in der Art einer Raste gehalten werden. Die Art der Rückstellung des Stützhebels hängt insbesondere von der Dimensionierung der Vorspannung, der Stützhebellänge, des Lagerpunkts und des Schwenkwinkels ab. So kann der Stützhebel je nach den Gegebenheiten durch einen Druck auf die Gepäckraumabdeckung in Richtung ihrer Schließstellung wieder eingeschwenkt werden oder der Stützhebel muß, insbesondere bei einer Verschwenkung in die Stützstellung über eine Totpunktstellung hinaus, in Richtung auf seine Ruhestellung von Hand rückgestellt werden. Grundsätzlich kann der Stützhebel auch hier sowohl an der Gepäckraumabdeckung als auch am Auflagerahmen befestigt sein und sich mit seinem freien Ende jeweils am anderen Gegenstand abstützen.

Für einen sicheren Halt des Stützhebels in seiner Stützstellung wird wenigstens ein Rastnocken für das freie Ende des Stützhebels vorgeschlagen, der z. B. als leichte Erhebung am Auflagerahmen ausgeführt sein kann. Bei mehreren, hintereinander liegenden Rastnocken, z. B. in der Art eines Zahnprofils, sind auch abgestützte Zwischenstellungen zwischen der Schließstellung und der Offenstellung der Gepäckraumabdeckung möglich.

Als Vorspannelement für einen schwenkbaren Stützhebel wird zweckmäßig eine Drehfeder in dessen Gelenk angebracht.

In einer alternativen Ausführung eines Stützelements wird dieses als linear in eine Rastmulde ausfahrbares, vorgespanntes Rastelement ausgebildet. Dabei ist wenigstens ein Rastelement in einem seitlichen Bereich der Gepäckraumabdeckung gehalten. In der Stützstellung bei offener Gepäckraumabdeckung ist das Rastelement mit seinem freien Ende in der Rastmulde eingerastet.

Das Rastelement kann auch hier am Auflagerahmen oder bevorzugt an der Gepäckraumabdeckung angebracht sein. Die Federvorspannung wird hier so dimensioniert, daß die in ihre Offenstellung hochgeschwenkte Gepäckraumabdeckung durch die Federkraft in der Offenstellung gehalten wird und beim Schließen der Gepäckraumabdeckung die Federvorspannung einfach überdrückbar ist.

Eine besonders klein bauende, stabile Abstützung mit der Möglichkeit abgestützter Zwischenstellungen für die Gepäckraumabdeckung ergibt sich, wenn als Rastelement eine durch eine Feder vorgespannte Arretierkugel im Bereich der Lagerzapfen angebracht ist, die in ein zugeordnetes Gegenelement im Bereich der aufbaufesten Lagerstellen in der Art eines Wellenprofils eingreift.

Alle vorstehenden Konstruktionen zeichnen sich dadurch aus, daß sie einfach und preisgünstig herstellbar sind. Insbesondere können die erforderlichen Bauteile als leichte Kunststoffteile ausgebildet sein. Zudem sind die Stützanordnungen im Gegensatz zu bekannten Haltebändern in der Schließstellung der Gepäckraumabdeckung nicht sichtbar. Eine Umstellung einer laufenden Fahrzeugserie, bei der die Gepäckraumabdeckung mit Haltebändern ausgerüstet ist, kann auf die erfindungsgemäße Anordnung ohne großen Aufwand durchgeführt werden. Ebenso kann die erfindungsgemäße Anordnung einfach nachgerüstet oder als Reparatursatz angeboten werden.

Die Erfindung wird nachfolgend anhand einer Zeichnung näher erläutert.

Es zeigen:
- Fig. 1: eine Anordnung mit einer Gepäckraumabdeckung in einem Fahrzeug mit einer ersten Ausführungsform eines Stützelements, und
- Fig. 2: eine Anordnung mit einer Gepäckraumabdeckung in einem Fahrzeug mit einer zweiten Ausführungsform eines Stützelements.

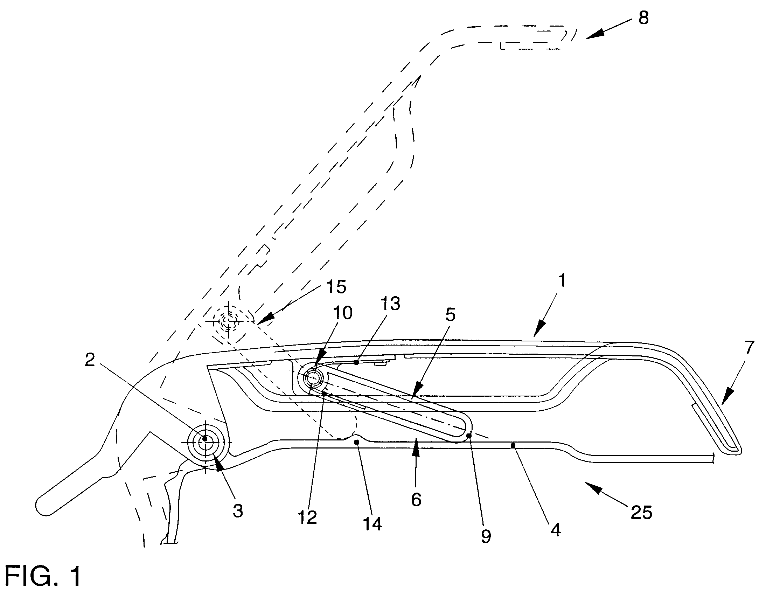

In der Fig. 1 ist eine Gepäckraumabdeckung 1 dargestellt, die an einem Auflagerahmen 4 eines Fahrzeugs gelagert ist. Die Lagerung erfolgt jeweils mit seitlichen Lagerzapfen 2 an aufbaufesten Lagerstellen 3, von denen in der Fig. 1 jeweils nur einer bzw. eine dargestellt ist.

Die Gepäckraumabdeckung 1 ist zwischen einer einen Gepäckraum 25 abdeckenden Schließstellung 7 und einer strichliert eingezeichneten Offenstellung 8, in der der Gepäckraum 25 frei zugänglich ist, verschwenkbar.

Zur Abstützung der Gepäckraumabdeckung 1 in ihrer Offenstellung 8 ist zu beiden Seiten der Gepäckraumabdeckung 1 jeweils ein schwenkbar vorgespannter Stützhebel 5 gelagert, von denen in der Fig. 1 nur einer dargestellt ist.

Als Vorspannelement für den Stützhebel 5 ist eine Drehfeder 10 an dessen Gelenk 11 angebracht. Diese Drehfeder 10 stützt sich mit einem ersten Federschenkelende 12 an dem Stützhebel 5 und mit einem zweiten Federschenkelende 13 an der Gepäckraumabdeckung 1 ab.

In seiner Ruhestellung 6, d.h. in der Schließstellung 7 der Gepäckraumabdeckung 1, liegt der Stützhebel 5 in etwa parallel zur Gepäckraumabdeckung 1 und dem Auflagerahmen 4. Bei einer Schwenkung der Gepäckraumabdeckung 1 in deren Offenstellung 8 wird der Stützhebel 5 aufgrund der durch die Drehfeder 10 über die Federschenkelenden 12, 13 wirkenden Federkraft mit seinem freien Ende 9 von der Gepäckraumabdeckung 1 weg in seine Stützstellung 15 bewegt. In der Offenstellung 8 der Gepäckraumabdeckung 1 steht der Stützhebel 5 somit voll aufgerichtet zwischen der Gepäckraumabdeckung 1 und dem Auflagerahmen 4.

Auf dem aufgerichteten Stützhebel 5 lastet das gesamte Gewicht der aufgeschwenkten Gepäckraumabdeckung 1, wodurch der Stützhebel 5 in seiner Stützstellung 15 gehalten wird. Dem freien Ende des Stützhebels 5 ist dabei ein Rastnocken 14 als Gegenelement zugeordnet.

Für eine Rückstellung der aufgeschwenkten Gepäckraumabdeckung 1 wird ein Druck auf die Gepäckraumabdeckung 1 in Richtung ihrer Schließstellung 7 ausgeübt. Dadurch wird der Stützhebel 5 mit seinem freien Ende 9 über den Rastnocken 14 gedrückt und damit wieder von seiner Stützstellung 15 in seine Ruhestellung 6 bewegt. Je nach Höhe und Form des Rastnockens 14 und der Winkelstellung des Stützhebels ist ggf. von Hand zu entrasten.

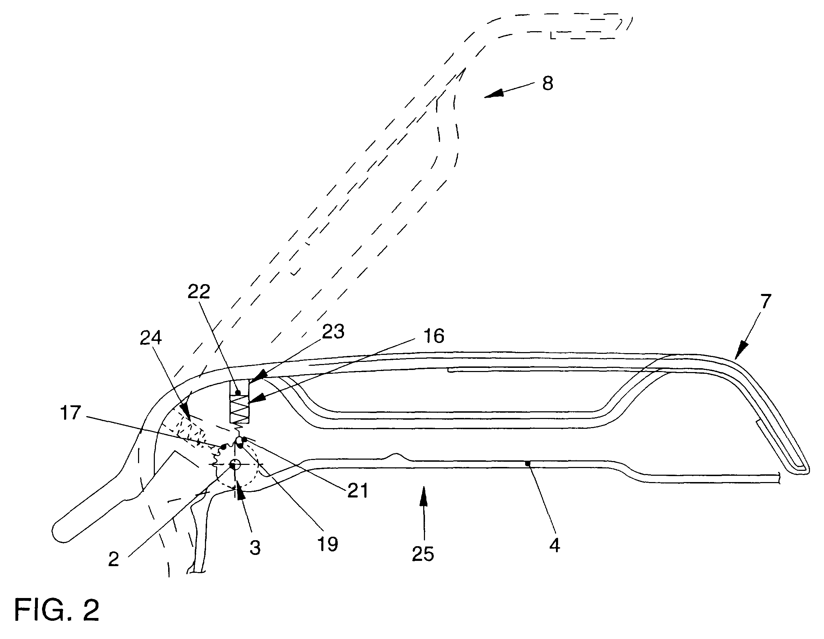

Eine zweite, alternative Ausführungsform eines Stützelements ist in Fig. 2 dargestellt. Dort sind die in den Fig. 1 und 2 gleichen Teile mit gleichen Bezugszeichen versehen.

Das Stützelement ist hier ein in Rastmulden 17 eines Gegenelements 19 ausfahrbares, vorgespanntes Rastelement 16. Die Rastmulden 17 des Gegenelements 19 bilden dabei eine Art Wellenprofil aus und sind gleichzeitig integraler Bestandteil der aufbaufesten Lagerstelle 3.

Jeweils ein Rastelement 16 ist zu beiden Seiten an der Gepäckraumabdeckung 1 gehalten, von denen hier nur eines dargestellt ist.

Das freie Ende 20 des Rastelements 18 ist als federvorgespannte Arretierkugel 21 ausgebildet. Die Federvorspannung der Arretierkugel 21 wird durch eine Feder 22 bewirkt, die so ausgelegt ist, daß die in ihre Offenstellung 8 hochgeschwenkte Gepäckraumabdeckung 1 durch die Federkraft in dieser Offenstellung 8 gehalten wird. Dabei befindet sich das Rastelement 16 in der durch das Bezugszeichen 24 angezeigten Stützstellung. Beim Schließen der Gepäckraumabdeckung 1 ist dagegen die Federvorspannung einfach überdrückbar, so daß sich das Rastelement 16 in der Schließstellung 7 der Gepäckraumabdeckung 1 in einer durch das Bezugszeichen 23 angezeigten Stellung befindet.

## Patentansprüche

1. Anordnung mit einer Gepäckraumabdeckung in einem Fahrzeug,
die mit seitlichen Lagerzapfen an aufbaufesten Lagerstellen eines Auflagerahmens gelagert ist und zwischen einer den Gepäckraum abdeckenden Schließstellung und einer Offenstellung verschwenkbar ist,
dadarch gekennzeichnet,
daß, wenigstens ein vorgespanntes Stützelement (5; 16) mit einem Ende an der Gepäckraumabdeckung (1) oder dem Auflagerahmen (4) befestigt ist, das in der Schließstellung (7) der Gepäckraumabdeckung (1) in einer vorgespannten Ruhestellung (6; 23) gehalten ist und das bei einer Schwenkung der Gepäckraumabdeckung (1) in deren Offenstellung (8) aufgrund der Vorspannung selbsttätig mit seinem freien Ende (9; 20) in eine Stützstellung (15; 24) bewegbar ist und dabei die Gepäckraumabdeckung (1) in der Offenstellung (8) gegenüber dem Auflagerahmen (4) abstützt und hält.

2. Anordnung mit einer Gepäckraumabdeckung nach Anspruch 1, dadurch gekennzeichnet, daß das Stützelement ein schwenkbar vorgespannter Stützhebel (5) ist, wobei wenigstens ein Stützhebel (5) in einem seitlichen Bereich der Gepäckraumabdeckung (1) gelagert ist, dergestalt, daß der Stützhebel (5) in der Ruhestellung (6) etwa parallel zur Gepäckraumabdeckung (1) und dem Auflagerahmen (4) liegt und in der Stützstellung (15) aufgerichtet zwischen der Gepäckraumabdeckung (1) und dem Auflagerahmen (4) steht.

3. Anordnung mit einer Gepäckraumabdeckung nach Anspruch 2, dadurch gekennzeichnet, daß im Gelenk (11) des Stützhebels (5) eine Drehfeder (10) als Vorspannelement angeordnet ist.

4. Anordnung mit einer Gepäckraumabdeckung nach Anspruch 2 oder Anspruch 3, dadurch gekennzeichnet, daß dem freien Ende (9) des Stützhebels (5) als Gegenelement in der Stützstellung (15) wenigstens ein Rastnocken (14) zugeordnet ist.

5. Anordnung mit einer Gepäckraumabdeckung nach Anspruch 4, dadurch gekennzeichnet, daß mehrere, hintereinanderliegende Rastnocken (14) vorgesehen sind.

6. Anordnung mit einer Gepäckraumabdeckung nach einem der Ansprüche 1 bis 5, dadurch gekennzeichnet, daß das Stützelement ein linear in eine Rastmulde (17) ausfahrbares, vorgespanntes Rastelement (16) ist, wobei wenigstens ein Rastelement (16) in einem seitlichen Bereich der Gepäckraumabdeckung (1) gehalten ist, dergestalt, daß das Rastelement (16) in seiner Stützstellung (24) bei offener Gepäckraumabdeckung (1) mit seinem freien Ende (20) in der Rastmulde (17) eingerastet ist.

7. Anordnung mit einer Gepäckraumabdeckung nach Anspruch 6, dadurch gekennzeichnet, daß das freie Ende (20) des Rastelements (16) als federvorgespannte Arretierkugel (21) ausgebildet ist, die in ein zugeordnetes Gegenelement (19) in der Art eines Wellenprofils eingreift.
